# FASCICULE DE BREVET EUROPEEN

(11) **EP 0 811 522 B1**
(45) Date de publication et mention de la délivrance du brevet: **17.09.2003**
(21) Numéro de dépôt: 97401050.6
(22) Date de dépôt: 12.05.1997
(51) Int. Cl.: B60L 9/30

(54) **Chaîne de traction multicourant**
Antriebsystem mit mehrfacher Bestromung
Multi-current traction system

(30) Priorité: 04.06.1996 FR 9606869
(43) Date de publication de la demande: 10.12.1997
(73) Titulaire: GEC ALSTHOM TRANSPORT SA, 75116 Paris (FR)
(72) Inventeur: Mai, Serge, 65310 Odos (FR)
(74) Mandataire: de Lambilly Delorme, Marie Pierre

(56) Documents cités:
- EP-A- 0 698 519
- PATENT ABSTRACTS OF JAPAN vol. 018, no. 151 (M-1576) 14 Mars 1994 & JP 05 328 519 A (MITSUBISHI ELECTRIC CORP) 10 Décembre 1993
- GEISSLER W ET AL: "MODELLING THE THREE PHASE PROPULSION SYSTEM OF A MODERN MULTISYSTEM-LOCOMOTIVE" EUROPEAN CONFERENCE ON POWER ELECTRONICS & APPLICATIONS, vol. 4, septembre 1991, pages 632-637, XP000390816

## Description

La présente invention concerne les chaînes de traction multicourant fonctionnant sous tension alternative monophasée et sous tension continue,

Il et connu, du document EP 0 698 519, une chaîne de traction comportant un condensateur dédié à un convertisseur monophasé/continu lors de la phase d'alimentation sous tension monophasé qui est également utilisé lorsque le circuit est alimenté directement sous tension continue et que le convertisseur monophasé/continu n'est pas piloté.

Toutefois, un tel document ne concerne pas un convertisseur monophasé/continu construit à base de composants IGBT.

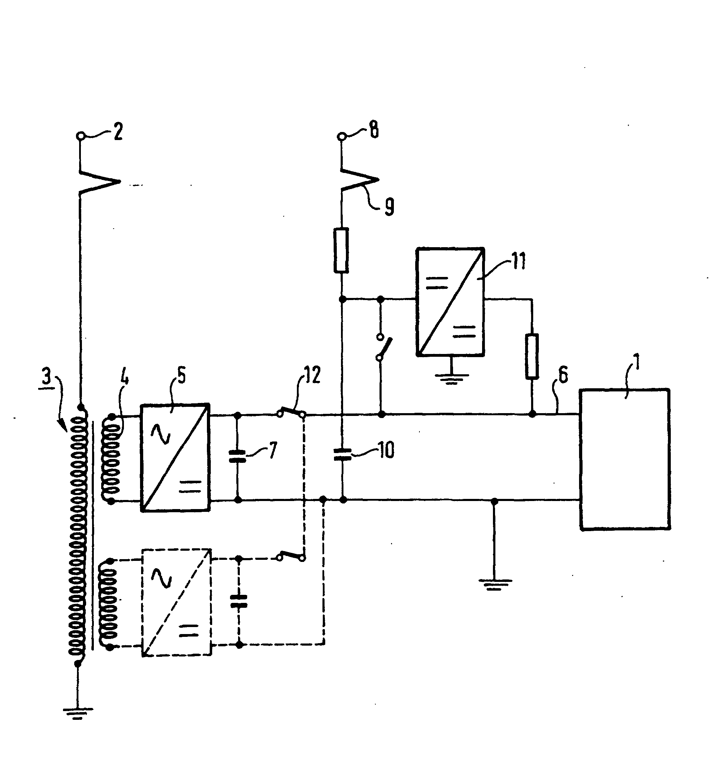

Une chaîne de traction multicourant, de l'état de la technique, fonctionnant sous tension alternative monophasée et sous tension continue est représentée à la figure unique.

Afin de fournir une tension continue aux onduleurs de traction 1, il est nécessaire sous alimentation monophasée 2 d'utiliser un transformateur 3 dont le secondaire 4 est connecté à un convertisseur monophasé/continu 5 d'entrée alimentant un bus commun 6.

Le bus commun 6 fournit son énergie aux onduleurs de traction 1 et aux autres équipements du train (non représentés)

Ce bus commun 6 doit généralement posséder une capacité totale importante pour fournir une tension stabilisée aux onduleurs de traction 1 travaillant en tension, ceci dans tous les cas de modes dégradés, à savoir: délestage brutal, décollement de pantographe, etc.

Le convertisseur monophasé/continu 5 redresseur d'entrée possède un condensateur 7 en sortie.

En particulier, les convertisseurs monophasé/continu redresseur construits à base de composants IGBT nécessitent un condensateur disposé au plus près afin de réduire les inductances de câblage.

En phase d'alimentation sous tension continue 8, le bus commun 6 est soit directement relié à une caténaire 9 via une inductance de filtrage 10, soit alimenté par un convertisseur continu/continu 11 élévateur ou abaisseur de tension.

Lors de cette phase d'alimentation sous tension continue, le convertisseur monophasé/continu 5 redresseur est isolé du bus commun 6 par l'ouverture d'un contacteur de sortie 12.

Un inconvénient d'une telle solution de l'art antérieur est que la chaîne de traction multicourant nécessite l'utilisation d'un condensateur supplémentaire (non représenté) lors de la phase d'alimentation sous tension continue.

Le mérite de la demanderesse consiste à proposer l'utilisation du condensateur 7 dédié au convertisseur monophasé/continu 5 redresseur lors de la phase d'alimentation sous tension monophasée également lors de la phase d'alimentation sous tension continue.

En d'autres, termes, le mérite de la demanderesse consiste à proposer que le condensateur 7 dédié au convertisseur monophasé/continu 5 redresseur soit un élément constitutif de la capacité totale du bus commun 6 en phase d'alimentation sous tension continue.

Dans une telle solution de l'invention, la sortie du convertisseur monophasé/continu 5 redresseur doit être mise sous tension en fermant le contacteur de sortie 12.

Le convertisseur monophasé/continu 5 redresseur n'est alors évidemment pas piloté dans la phase d'alimentation sous tension continue.

Une telle configuration peut être étendue au cas de plusieurs ensembles convertisseurs monophasé/continu redresseurs-condensateurs en parallèle sur le bus commun.

De plus, dans le cas de plusieurs convertisseurs monophasé/continu redresseurs et condensateurs en parallèle, une modulation de la capacité de filtre équivalente est possible en configurant les contacteurs de façon appropriée.

Conformément à l'invention, la chaîne de traction multicourant mettant en jeu une phase d'alimentation sous tension monophasée et une phase d'alimentation sous tension continue, se caractérise en ce qu'elle comprend plusieurs convertisseurs monophasé/continu redresseurs en parallèle, les convertisseurs monophasé/continu étant construits à base de composante IGBT et comportant chacun un condensateur disposé au plus près afin de réduire les inductances de câblage, la chaîne de traction comporte plusieurs convertisseurs monophasé/continu redresseurs et condensateurs en parallèle, la sortie du convertisseur monophasé/continu redresseur est mise sous tension en fermant un contacteur de sortie et en ce que la capacité de filtre équivalente est modulée en configurant lesdits contacteurs de façon appropriée de manière à ce que certains condensateurs dédiés à un convertisseur monophasé/continu redresseur lors de ladite phase d'alimentation sous tension monophasée sont également utilisés lors de ladite phase d'alimentation sous tension continue et en ce que lesdits convertisseurs monophasé/continu redresseur ne sont pas pilotés dans ladite phase d'alimentation sous tension continue.

Un avantage de la chaîne de traction multicourant de l'invention est de pouvoir adapter les fréquences propres du filtre.
Un autre avantage de la chaîne de traction multicourant de l'invention est une réduction du volume, du poids et du nombre des condensateurs nécessaires.

## Revendications

1. Chaîne de traction multicourant mettant en jeu une phase d'alimentation sous tension monophasée et une phase d'alimentation sous tension continue, **caractérisé en ce qu'**elle comprend plusieurs convertisseurs monophasé/continu (5) redresseurs en parallèle, lesdits convertisseurs monophasé/continu redresseurs étant construits à base de composants IGBT et comportant chacun un condensateur (7) en parallèle disposé au plus près afin de réduire les inductances de câblage, la sortie de chaque convertisseur monophasé continu (5) redresseur étant mise sous tension en fermant un contacteur de sortie (12) et **en ce que** la capacité de filtre équivalent en phase d'alimentation continu est modulée en configurant lesdits contacteurs (12) de manière à ce que certains condensateurs (7), dédiés à un convertisseur monophasé/continu (5) redresseur à base de composant IGBT lors de la phase d'alimentation sous tension monophasée, soient également utilisés lors de ladite phase d'alimentation sous tension continue, lesdits convertisseurs monophasé/continu (5) redresseur n'étant pas pilotés dans ladite phase d'alimentation sous tension continue.

## Patentansprüche

1. Mehrstromzugkette, die eine Einphasenspannungs-Versorgungsphase und eine Gleichspannungs-Versorgungsphase verwendet,
**dadurch gekennzeichnet, dass** sie mehrere parallele Gleichrichter-Einphasen/Gleichspannungs-Wandler (5) aufweist, wobei die Gleichrichter-Einphasen/Gleichspannungs-Wandler auf der Basis von IGBT-Bauteilen hergestellt sind und jeweils einen parallelen Kondensator (7) aufweisen, der so nah wie möglich angeordnet ist, um die Verdrahtungsinduktanzen zu verringern, wobei der Ausgang eines jeden Gleichrichter-Einphasen/Gleichspannungs-Wandlers (5) unter Spannung gesetzt wird, indem ein Ausgangs-Kontaktgeber (12) geschlossen wird, und dass die äquivalente Filterkapazität in Gleichspannungsversorgungsphase moduliert wird, indem die Kontaktgeber (12) derart konfiguriert werden, dass bestimmte Kondensatoren (7), die auf einen Gleichrichter-Einphasen/Gleichspannungs-Wandler (5) auf der Basis eines IGBT-Bauteils während der Einphasenspannungs-Versorgungsphase dediziert sind, ebenfalls während der Gleichspannungs-Versorgungsphase verwendet werden, wobei die Gleichrichter-Einphasen/Gleichspannungs-Wandler (5) in der Gleichspannungs-Versorgungsphase nicht fremdgeführt sind.

## Claims

1. A multiple-powersupply traction system capable of operating under a single-phase AC power supply and under a DC power supply, **characterized in that** it comprises a plurality of AC/DC converter rectifiers (5) in parallel, said AC/DC converter rectifiers being built using IGBT components, and each including a capacitor (7) in parallel disposed as close as possible so as to reduce cabling inductance, the output from each AC/DC converter rectifier (5) having voltage applied thereto by closing a output contactor (12), and **in that** the capacitance in DC power supply of the equivalent filter is modulated by configuring said contactors (12) in such a manner that some capacitors (7) dedicated to an AC/DC converter rectifier (5) using IGBT components while operating under single-phase AC power supply are also used while operating under DC power supply, said AC/DC converter rectifiers (5) not running while operating under DC power supply.
